(19) Europäisches Patentamt
European Patent Office
Office européen des brevets

(11) **EP 4 712 039 B1**

(12) **EUROPEAN PATENT SPECIFICATION**

(45) Date of publication and mention
of the grant of the patent:
**08.07.2026 Bulletin 2026/28**

(21) Application number: **24200045.3**

(22) Date of filing: **12.09.2024**

(51) International Patent Classification (IPC):
*G06V 10/20* *(2022.01)*      *G06V 10/82* *(2022.01)*
*G06V 40/10* *(2022.01)*

(52) Cooperative Patent Classification (CPC):
**G06V 10/82; G06V 10/255; G06V 40/103;**
G06V 20/52

(54) **OBJECT SUBPART-GUIDED FILTERING FOR OBJECT DETECTION**

TEILGEFÜHRTE OBJEKTFILTERUNG ZUR OBJEKTERKENNUNG

FILTRAGE GUIDÉ PAR SOUS-PARTIE D'OBJET POUR DÉTECTION D'OBJET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.03.2026 Bulletin 2026/12**

(73) Proprietor: **Axis AB**
**223 69 Lund (SE)**

(72) Inventor: **Jönsson, Andreas**
**22369 LUND (SE)**

(74) Representative: **AWA Sweden AB**
**Matrosgatan 1**
**Box 5117**
**200 71 Malmö (SE)**

(56) References cited:
**KR-B1- 101 470 367      US-A1- 2021 125 342**

• **GU JUNHUA ET AL: "Joint Pedestrian and Body
Part Detection via Semantic Relationship
Learning", APPLIED SCIENCES, vol. 9, no. 4, 21
February 2019 (2019-02-21), pages 752,
XP093237668, ISSN: 2076-3417, DOI: 10.3390/
app9040752**

• **JIALUE FAN ET AL: "Human Tracking Using
Convolutional Neural Networks", IEEE
TRANSACTIONS ON NEURAL NETWORKS, IEEE
SERVICE CENTER, PISCATAWAY, NJ, US, vol. 21,
no. 10, 1 October 2010 (2010-10-01), pages 1610 -
1623, XP011373843, ISSN: 1045-9227, DOI:
10.1109/TNN.2010.2066286**
• **SEKII TAIKI ED - LEE SEONG-WHAN ET AL:
"Pose Proposal Networks", 6 October 2018, SAT
2015 18TH INTERNATIONAL CONFERENCE,
AUSTIN, TX, USA, SEPTEMBER 24-27, 2015;
[LECTURE NOTES IN COMPUTER SCIENCE;
LECT.NOTES COMPUTER], SPRINGER, BERLIN,
HEIDELBERG, PAGE(S) 350 - 366, ISBN:
978-3-540-74549-5, XP047489303**
• **KAIMING HE ET AL: "Mask R-CNN", ARXIV.ORG,
CORNELL UNIVERSITY LIBRARY, 201 OLIN
LIBRARY CORNELL UNIVERSITY ITHACA, NY
14853, 20 March 2017 (2017-03-20), XP081305537**

## Description

### Technical field

The present disclosure relates to object detection in images. In particular, the present disclosure relates to post-processing of object proposals provided by object detection, to remove possible multiple detections of the same object.

### Background

The post-processing of outputs from anchor-based object detectors, such as those implemented using various artificial neural network (ANN) architectures, often include one or more filtering operations, based on e.g. non-maximum suppression (NMS). The output from such object detectors, referred to as object proposals or candidates, often contain not only one, but multiple, proposals for a same object, and an important part of the post-processing is thus to figure out which of the many object proposals that most likely corresponds to an actual location of an object in an image, and to perform filtering to discard the other object proposals.

As an example, an object detector may output a plurality of bounding boxes indicating candidate locations for an object in an image, together with classification confidence scores indicative of how certain the object detector is that each particular bounding box contains an object of a particular object class, such as e.g. a person, an animal, a vehicle, or similar. As there may be multiple objects in an image, a decision is needed on which box or boxes that should be retained and which box or boxes that should be discarded. Filtering such as that based on NMS is often implemented using so-called intersection-over-union (IoU) proximity measures (i.e. proximity scores), calculated as a ratio of a size of the overlap of two bounding boxes to a joint area of both boxes. If two boxes overlap, the box having the highest confidence score is kept, and the other box is discarded if its overlap (or IoU) with the first box is above an overlap (or IoU) threshold.

If setting the overlap threshold too high, the risk of retaining several boxes indicative of a same object increases, leading to an increased number of "false positives" and thereby to a reduced precision. If instead setting the overlap threshold too low, the risk of discarding e.g. one of two boxes indicative of two different objects increases, leading to a reduced "recall" (i.e. a ratio of accurately identified objects to a true number of objects in an image). Consequently, how to set the aggressiveness of the filtering (by adjusting e.g. the overlap threshold) may be a delicate matter, and one is often forced to use routine testing in order to find a level of aggressiveness that provides a sufficiently good compromise between precision and recall. Even if e.g. an optimal overlap threshold is found, the threshold may be specific for a particular type of scene (i.e. crowded, non-crowded, etc.), depend on the specifics of the object detector, and may not be easily transferable to other types of scenes.

There is therefore a need to improve upon such contemporary technology, and to provide a way of post-processing object detection data that reduces the risk of false positives and reduced recall. A solution for joint detection of pedestrian and body parts is disclosed in Junhua Gu et al, "Joint Pedestrian and Body Part Detection via Semantic Relationship Learning", Appl. Sci. 2019, 9, 752.

### Summary

To at least partially satisfy the above-identified need, the present disclosure provides an improved method of object detection (post-processing), a device for such object detection (post-processing), and a corresponding computer program and computer program product as defined in and by the accompanying independent claims. Various example embodiments of the method, device, computer program and computer program product are defined in and by the accompanying dependent claims.

According to a first aspect of the present disclosure, there is provided a method of object detection (post processing) in an image. The method includes obtaining, from one or more ANN entities trained to localize objects and one or more subparts of objects in images, a plurality of object proposals and one or more subpart proposals in a same image. The method further includes performing a first filtering of the object proposals. The method further includes, for each subpart proposal, matching the subpart proposal with a corresponding one of one or more object proposals remaining after the first filtering. The method further includes performing a second filtering of the one or more object proposals remaining after the first filtering and not matched with any one of the one or more subpart proposals. Phrased differently, the second filtering is such that it refrains from discarding object proposals matched with a corresponding subpart proposal as part of the preceding matching operation. In the method, the first filtering and the second filtering are based on classification confidence scores and proximity scores of the object proposals, and the second filtering is (statistically) more aggressive than the first filtering (except that it refrains from discarding the object proposals matched with a subpart proposal). As used herein, "being (statistically) more aggressive" means that to discard an object proposal having a lower classification confidence score than another object proposal using the second filtering requires less proximity than if using the first filtering.

The envisaged method improves upon currently available technology in that it uses the detection of object subparts (such as e.g. heads or other limbs/extensions in case of persons or animals, license plates in case of vehicles, or similar) in order to guide the overall filtering to better separate objects that are close together, in a way that reduces the risk of discarding one of two candidate object proposals that are close to each other but that actually identifies two separate objects, such as e.g. two persons standing close or at least partially behind/in front of each other in the image. If using e.g. NMS-based filtering, the first filtering may use e.g. a higher proximity threshold such that more object proposals are (at least statistically) retained after the first filtering, and the locations of the detected subparts may be used to identify which of the multiple object proposals remaining after the first filtering that are likely to belong to different objects and to thereby avoid the discarding of any of such different object proposals during the subsequent second filtering. For object proposals for which a matching subpart (such as a head) is not found, the more aggressive second filtering may allow to still discard such proposals, with the assumption that they are likely to be detections of a same object as any of the object proposals to/with which a subpart is assigned/matched. Phrased differently, the envisaged method is capable of dealing both with clusters of object proposals (e.g. bounding boxes) belonging to a same object, with clusters of object proposals belonging to different objects, and also with object proposals not forming part of any cluster, in a way that reduces the risk of false positives and of reduction of recall. Being able to more accurately detect different objects close together may further improve e.g. overall tracking accuracy, and may for example be particularly valuable for use cases involving object counting or similar. As used herein, that one filtering is statistically more aggressive than another means that if provided with the same object proposals, the more aggressive filtering will statistically (e.g. on average, if the process is repeated multiple times for e.g. multiple different sets of object proposals in e.g. many different scenes) discard more of the object proposals than the less aggressive filtering.

In one or more embodiments of the method, the objects may be persons and/or animals, and the subparts may be heads of such persons and/or animals.

In one or more embodiments of the method, the proximity scores of the object proposals may be found (e.g. calculated) using IoU (as proximity score measure). In other embodiments, other proximity score measures may be used instead of, or in addition to, IoU, such as those based on e.g. Manhattan distance or similar. Generally herein, a "proximity score measure" may also be referred to as just a "proximity score" or "proximity measure", and refers to an indication of how proximate two proposals are to each other that allows determining whether an object proposal is more proximate to a first other object proposal than to a second other object proposal.

In one or more embodiments of the method, at least one of the first filtering and the second filtering may be based on NMS. For example, at least one of the first and second filtering may use NMS and a proximity score measure based on IoU. The second filtering being statistically more aggressive than the first filtering may then include that the IoU threshold used for the second filtering is lower than that used for the first filtering, and similar. For example, both the first filtering and the second filtering may use NMS, with IoU as a proximity score measure and with respective first and second IoU thresholds for the first and second filtering, wherein the second IoU threshold is lower than the first IoU threshold to make the second filtering more aggressive than the first filtering.

In one or more embodiments of the method, the method may include filtering, as part of the matching, the one or more object proposals remaining after the first filtering based on their spatial overlap with the subpart proposal. As used herein, such filtering may not necessarily remove object proposals, but only serve to identify which object proposals that has a sufficiently large overlap with the subpart proposal. Filtering of the other object proposals may still take place as part of the second filtering, as object proposals not associated with any subpart are more likely to be discarded as part of the second filtering due to the lower, second proximity threshold.

In one or more embodiments of the method, the matching may include calculating a subpart and object proposal matching score (herein also referred to as just a "matching score"), and to match the subpart with the object proposal having the highest such matching score.

In one or more embodiments of the method, the matching score may depend on a spatial offset between a location (and/or e.g. a center point) of the subpart proposal and an assumed optimal location (and/or e.g. a center point) of the subpart proposal if belonging to the object proposal. For example, a human head may be assumed as being located at a certain part of a body, and a head may be matched with a body on which the position of the head is closest to the assumed "optimal" location of the head. For example, for a person standing upright and facing the camera, an assumed location of the head may be e.g. in the middle of the body horizontally, and e.g. at 10% of the height of the body vertically measured from the top of the body, or similar.

In one or more embodiments of the method, the matching score may further depend on the classification confidence score for the object proposal, such that the subpart is assumed to more likely belong to an object proposal having a higher classification confidence score, possibly as one of many factors taken into account when deciding to which object proposal to assign/match the subpart.

In one or more embodiments of the method, the matching score may further depend on a localization score for the object proposal, such that the subpart is assumed to more likely belong to an object proposal for which the confidence of the estimated location (in the image) is higher, possibly as one of many factors taken into account when deciding to which object proposal to assign/match the subpart.

In one or more embodiments of the method, the matching score may be equal or at least proportional to a ratio of a product of the classification confidence score and localization score for the object proposal to the spatial offset.

In one or more embodiments of the method, the matching score may be such that matching of an object proposal with a subpart proposal is avoided if a ratio of an overlap of the subpart proposal and object proposal to an overall size of the subpart proposal is below an object and subpart intersection threshold. For example, matching may be avoided if e.g. at least X percent of a subpart (such as e.g. a head) is not overlapping with the object (such as e.g. a body), where X corresponds to the object and subpart intersection threshold, or similar.

In one or more embodiments of the method, a statistical aggressiveness of the first filtering may depend on a distance between locations of the subpart proposals (in the image), and the statistical aggressiveness of the first filtering may decrease with a decreasing such distance (between subpart proposals) and increase with an increasing such distance. For example, in an image where there are many subparts lying closely together and if NMS with IoU as a proximity score measure (or similar) is used for filtering, the aggressiveness of the first filtering may be lower than in an image where there are fewer subparts lying closely together, and vice versa. Phrased differently, the statistical aggressiveness of the first filtering may be dynamic and adapted based on the particular image in which the object detection is performed, and in particular on the density of subpart proposals identified therein.

According to a second aspect of the present disclosure, there is provided a device including processing circuitry. The processing circuitry is configured to perform the various operations of the method according to the first aspect. In other example embodiments of the device, the processing circuitry is configured to perform the various operations of any example embodiment of the method as envisaged herein.

In one or more embodiments of the device, the device may be a monitoring camera, as used e.g. for surveillance or other purposes.

According to a third aspect of the present disclosure, there is provided a computer program that includes computer code. The computer code is such that when run on processing circuitry of a device (such as the processing circuitry of the device of the second aspect), the computer code causes the device to perform the various operations of the method of the first aspect. In other example embodiments of the computer program, the computer code may be such that it causes the device to perform the various operations of any example embodiment of the method as envisaged herein.

According to a fourth aspect of the present disclosure, there is provided a computer program product that includes a computer-readable storage medium. The computer-readable storage medium stores the computer program of the third aspect (or any example embodiment thereof as envisaged herein). As used herein, the computer-readable storage medium may e.g. be non-transitory, and be provided as e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also the device of the second aspect, the computer program of the third aspect, and the computer program product of the fourth aspect, and vice versa.

## Brief description of the drawings

Exemplifying embodiments will be described below with reference to the accompanying drawings, on which:

Figure 1A schematically illustrates an image of an example scene including multiple objects to be identified and located;

Figure 1B schematically illustrates a collection of object proposals/bounding boxes output by an object detector as a result of processing the image of Figure 1A;

Figure 1C schematically illustrates an example of conventional post-processing of the object proposals of Figure 1B, including the use of filtering based on non-maximum suppression;

Figure 1D schematically illustrates an example outcome of the conventional post-processing shown in Figure 1C;

Figures 2A, 2B and 2C schematically illustrate examples of an improved solution for post-processing according to the present disclosure;

Figure 3 schematically illustrates a flowchart of an example method of object detection, including improved post-processing according to the present disclosure;

Figure 4 schematically illustrates another example scene in which the envisaged improved solution is applicable;

Figures 5A and 5B schematically illustrate components and functional blocks of various examples of a device according to the present disclosure, and

Figure 6 schematically illustrates examples of a computer program, computer program product and computer-readable storage medium according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

### Detailed description

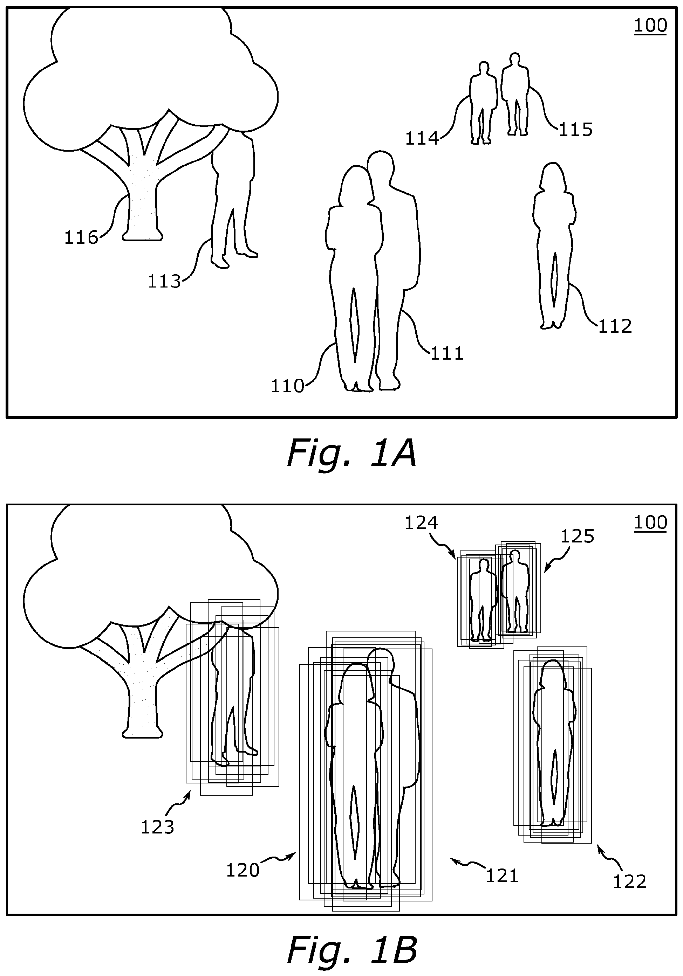

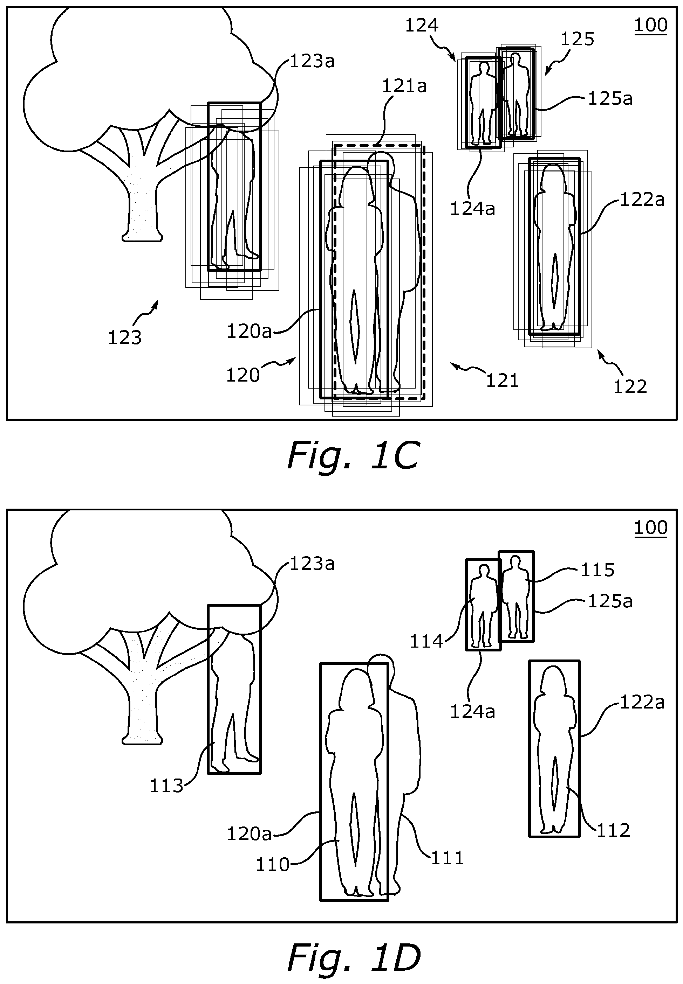

The workings, and disadvantages, of conventional post-processing of the output from an object detector will now be discussed with reference to Figures 1A, 1B, 1C and 1D.

Figure 1A schematically illustrates an image 100 of an example scene in which conventional methods of object detection may struggle. The scene includes multiple objects in form of various persons 110, 111, 112, 113, 114 and 115. In the foreground, the persons 110 and 111 are located such that the person 110 partially overlaps the person 111. In the background, persons 114 and 115 are also located close to each other, but with no overlap. The person 112 is fully visible and located in between persons 110, 111 and persons 114, 115. The head of person 113 is hidden behind a tree 116.

Figure 1B schematically illustrates an output of an object detector configured to identify, classify and locate objects in images, after having processed the image 100. In this example, the object detector is anchor-based and implemented using an ANN-based architecture. The output from the object detector is a plurality of object proposals, that each define a bounding box indicative of where in the image 100 the proposed object is located. Each object proposal may also indicate e.g. to which object class (such as persons, vehicles, animals, etc.) the object belongs, and a classification confidence score indicative of how certain the object detector is that the identified object belongs to the proposed object class. The object proposal may also include e.g. a localization score that indicates how certain the object detector is that the object is at the location indicated by the bounding box. An object proposal may of course also, in some examples, include e.g. a list of classification confidence scores for a plurality of different object classes, e.g. one score for the class "person", another score for the class "animal", a third score for the class "vehicle", and so on, all depending on the exact configuration and training of the used ANN architecture.

In reality, there may be many more object proposals than those shown in Figure 1B. For the sake of clarity, and to avoid cluttering, only a limited number of object proposals is shown in Figure 1B, including a first plurality 120 located around person 110, a second plurality 121 located around person 111, a third plurality 122 located around person 112, a fourth plurality 124 located around person 114, and a fifth plurality located around person 115. Each object proposal is assumed to define a bounding box and a classification confidence score. A bounding box may for example be defined by a set of coordinates, such as for example coordinates for its top-left and bottom-right corners, or similar. As another example, a bounding box may be defined by its center coordinate together with an indicated width and height, or similar. In yet other examples, the "bounding box" may not necessarily be rectangular, but may be represented by a polygon having e.g. three or more edges, or similar. A confidence classification score may for example be represented as a number between 0.0 and 1.0, a percentage between 0 and 100 %, or similar, indicating how certain the object detector is about the classification. Likewise, a similar score for the location/bounding box may also be provided.

Figure 1C schematically illustrates how non-maximum suppression (NMS) may be used to decide which of the plurality of object proposals that most likely correspond to the true location of the object in the image 100. For this purpose, NMS often includes one or more proximity score measures indicative of how close two bounding boxes are in the image, how much two bounding boxes overlap, or similar. Phrased differently, the proximity score measure is such that it enables to compare the proximity of one box with each of two others, in order to decide which two boxes that are more proximate to each other. One commonly used such proximity measure is referred to as "intersection over union" (IoU), also known as Jaccard index, Jaccard similarity coefficient, Tanimoto index, Tanimoto coefficient or similar. The IoU for two different boxes $b_i$ and $b_j$ may be defined as

$$IoU(b_i, b_j) = \frac{|b_i \cap b_j|}{|b_i \cup b_k|},$$

i.e. as the ratio of the area of overlap between the boxes to the joint area of the union of the boxes. For example, if a bounding box $b_i$ is defined by its top-left coordinate $(x_{iL}, y_{iT})$ and bottom-right coordinate $(x_{iR}, y_{iB})$, the IoU of boxes $b_i$ and $b_j$ may be calculated as

$$IoU(b_i, b_j) = \frac{A_{intersection}}{A_{union}},$$

where

$$A_{intersection} = \left[\min(x_{iR}, x_{jR}) - \max(x_{rL}, x_{jL})\right] \times \left[\min(y_{iB}, y_{jB}) - \max(y_{iT}, y_{jT})\right]$$

and

$$A_{union} = (x_{iR} - x_{iL}) \times (x_{iB} - x_{iT}) + (x_{jR} - x_{jL}) \times (x_{jB} - x_{jT}) - A_{intersection}.$$

NMS includes to first identify the object proposal with the highest classification confidence score and to add this object proposal to a list of proposals that are to be kept/retained. The IoUs between this proposal and each of all other object proposals are then calculated, and any other proposal for which the IoU with the proposal having the highest classification confidence score exceeds an overlap threshold $IoU_{threshold}$ is discarded. Among the remaining object proposals not yet on the list of proposals that are to be kept, the process is then repeated by identifying the highest object proposal having the highest classification confidence score (and adding also this proposal to the list of proposals that are to be kept), calculating the IoUs between this box and the others, and to discard those proposals for which the IoU exceeds the threshold $IoU_{threshold}$, and so on, until each original object proposal has either been added to the list of proposals that are to be kept or discarded. The list of proposals to be kept then represents the final output, and provides a list of what is considered the most likely objects and their locations in the image. If completely successful, in the situation illustrated in Figure 1C, this would result in keeping only the object proposals 120a (for the person 110), 121a (for the person 111), 122a (for the person 112), 123a (for the person 113), 124a (for the person 114) and 125a (for the person 115), as illustrated in Figure 1C.

Figure 1D schematically illustrates the result and issues of the conventional process, where it can be seen that person 111 is not correctly identified, due to the proposal/box 121a being discarded as part of the NMS procedure. This occurred because i) the threshold $IoU_{threshold}$ must be set rather low in order to avoid a high number of false positives; ii) the person 111 being partially occluded/hidden by the person 110 resulted in the classification confidence score for proposal 121a being lower than the proposal 120a, and iii) the persons 110 and 111 standing so close to each other in the image 100 that the overlap, and thereby also the IoU, between the bounding boxes of proposals 120a and 121a was larger than $IoU_{threshold}$. The threshold $IoU_{threshold}$ is often found/tuned based on experience and from running the post-processing algorithm on multiple outputs, such that it provides satisfying results for as many different situations as possible. A higher $IoU_{threshold}$ would however likely have caused the proposal 121a to be correctly retained after the filtering, but would also likely have resulted in many other proposal that do not correspond to the true location of any object also being kept, thereby leading to an increased number of false positives in the attempted detection of the objects 110-115 and their true locations in the image 100. In conclusion, it is noted that the conventional NMS-based postprocessing of the output from the object detector is likely to discard proposals that correspond to an object being partially hidden by another object, and thereby a reduced recall. In the image 100, a perfect recall would have required all six persons 110-115 to be correctly detected, which is not the case in the situation shown in Figure 1D as person 111 was not correctly detected.

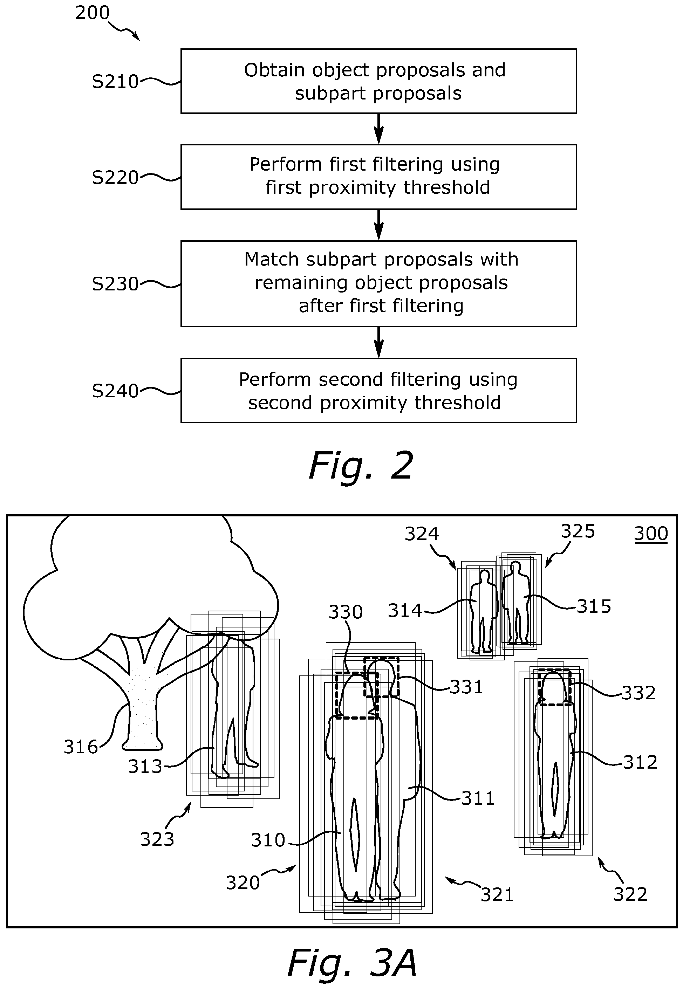

How the present disclosure envisages to solve the above-identified issues of conventional technology will now be described in more detail with reference also to Figures 2, 3A, 3B, 3C, 4, 5A, 5B and 6.

Figure 2 schematically illustrates a flowchart of an improved method 300 for object detection (and post-processing of object detector output) as envisaged herein.

Figure 3A schematically illustrates an image 300 of an example scene similar or equal to that of image 100, including persons 310, 311, 312, 313, 314, 315 and tree 316 corresponding to persons 110, 111, 112, 113, 114, 115 and tree 116, respectively. Illustrated in Figure 3A is also an example output from an object detector, in the form of a plurality of object proposals 320 (around person 310), 321 (around person 311), 322 (around person 312), 323 (around person 313), 324 (around person 314), and 325 (around person 315), as illustrated by the bounding boxes. The setup is thus similar or equal to the one described with reference to Figure 1B. However, in addition, the solution of the present disclosure also takes into account other information about objects, i.e. about subparts of such objects, in the scene, and will use this additional information to more accurately detect/post-process objects that are close to each other. For the current example, such subparts include human heads 330, 331 and 332 of the persons 310, 311 and 312, respectively, that may be identified using a detector (such as an ANN-based architecture) configured and trained for such classification and localization. In the current example, it is assumed that the head of the person 313 could not be detected due to the person 313 hiding behind the tree 316, and the heads of the persons 314 and 315 could not be detected due to the persons 314 and 315 being located sufficiently far from the camera, resulting in their heads being represented by fewer pixels (and thereby with too low resolution) than e.g. the heads of the persons 310, 311 and 312, respectively. Just as for image 100, there may of course be many more object proposals provided from the object detector than those shown in Figure 3A, but such additional proposals are not shown in order to avoid cluttering.

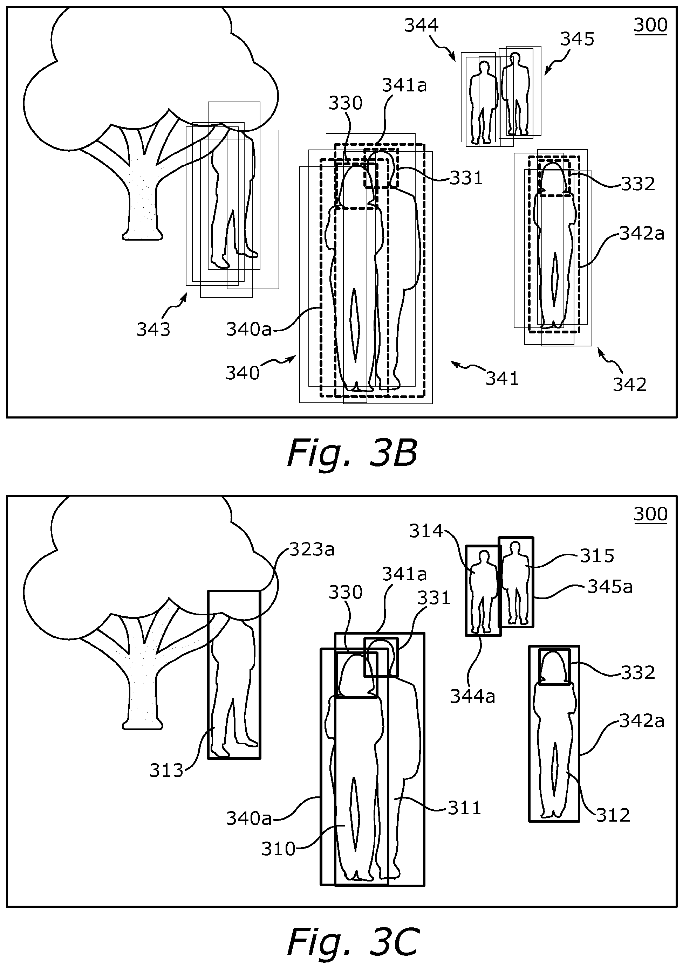

Figure 3A illustrates the determined most likely locations for the heads 330, 331 and 332. The head detector may of course have output multiple head proposals (e.g. a plurality of bounding boxes and confidence scores for each box), and one or more conventional NMS procedures may have been used to filter the head proposals such that only the ones shown in Figure 3B are retained, or similar. It is noted that the head detector may not necessarily also know to which person each head belongs, but may be configured to only detect heads without further consideration.

In summary so far, it is envisaged that in the improved solution, both a plurality of object proposals as well as one or more subpart proposals are obtained, for example from a same or different ANN entity (or entities) that has/have been trained to localize (and e.g. classify) objects (such as e.g. persons) as well as subparts (such as e.g. heads). Obtaining the plurality of object proposals and subpart proposals may be performed as part of an operation S210 of the method 200 shown in Figure 2.

Figure 3B schematically illustrates a next step of the envisaged solution, which includes performing a first filtering the object proposals 320-325 obtained as part of operation S210, but with a lower statistical aggressiveness compared to e.g. filtering as performed in e.g. conventional NMS. For example, if using NMS with a proximity score based on IoU, the operation (e.g. an operation S220 of the method 200) includes performing a first filtering of the object proposals 320-325, where the first filtering includes discarding of object proposals that have lower classification confidence scores than one or more other object proposals and that are more proximate to the one or more other object proposals than a first proximity threshold. The first proximity threshold, if being e.g. an IoU threshold, would thus be higher than that used for the conventional process shown in Figures 1A-1D. As a consequence, the first filtering does result in more object proposals being retained, which is illustrated in Figure 3B as a reduced plurality of object proposals 340 (around person 310), 341 (around person 311), 342 (around person 312), 343 (around person 313), 344 (around person 314), and 345 (around person 315) remaining after the first filtering operation S220.

As envisaged herein, how proximate two object proposals are may for example be decided by introducing a proximity measure, e.g. a function $P(b_i, b_j)$ that provides a number indicating how proximate two different object proposals with bounding boxes $b_i$ and $b_j$ are. As one example, IoU can be used as such a proximity measure, e.g. such that $P(b_i, b_j) = IoU(b_i, b_j)$, where a higher value of $P(b_i, b_j)$ thus indicates that the two boxes are more proximate and vice versa. Other proximity measures are however also possible, such as for example based on the Manhattan distance $MD(p_i, p_j)$ between two points $p_i = (x_i, y_i)$ and $p_j = (x_j, y_j)$ in an image, e.g. such that

$$MD(p_i, p_j) = \left|x_j - x_i\right| + \left|y_j - y_i\right|.$$

For two boxes $b_i$ and $b_j$ defined by their respective top-left and bottom-right coordinates, the proximity measure may be defined as e.g.

$$P(b_i, b_j) = MD(p_{iTL}, p_{jTL}) + MD(p_{iBR}, p_{jBR}),$$

where $p_{iTL} = (x_{iL}, y_{iT})$ and $p_{iBR} = (x_{iR}, y_{iB})$ and similarly for $p_{jTL}$ and $p_{jBR}$. For such a measure, it is noted that a lower value indicates that the two boxes are more proximate, and that a higher value indicates that the two boxes are less proximate. An example of such non-IoU based NMS includes "Confluence", as described in more detail in "Confluence: A Robust Non-IoU Alternative to Non-Maxima Suppression in Object Detection" by A. Shepley et al (arXiv:2012.00257).

Whether two boxes are sufficiently proximate to cause an action is envisaged as being decided by comparing the used proximity score measure against a threshold, i.e. a proximity threshold. How this comparison is made will depend on what proximity measure that is used. For example, for two boxes to be sufficiently proximate to trigger an action and when using IoU as the proximity measure, the proximity measure would have to be above a proximity threshold. If instead using the Manhattan distance-based proximity measure, the action is instead triggered if the proximity measure is below a proximity threshold. It is of course also envisaged to use other types of proximity measures, e.g. binary measures that are e.g. "0" or "false" if two objects/boxes are not considered proximate enough, and "1" or "true" if the contrary is true. For the purpose of the present disclosure, it is sufficient to have some kind of measure of proximity, but not important if the measure outputs a continuous number or just a binary number. For a binary measure, instead of using different thresholds to indicate different levels of proximity, one may for example introduce different binary measures, i.e. one measure for object proposals being sufficiently proximate according to one definition/condition, and another measure for object proposals being sufficiently proximate according to some other definition/condition, and so on. As used herein, independent of which exact proximity measure that is used, two object proposals will be considered to be sufficiently proximate to trigger an action if the proposals are "more proximate to one another than a proximity threshold", wherein "than a proximity threshold" may include the proximity measure being above the threshold, below the threshold, or e.g. the proximity measure having been derived using a particular threshold, and similar.

Starting with a set $OP = \{op_1, op_2, ..., op_N\}$ of object proposals obtained from the object detector (where $op_i$ is the i:th such proposal, and $N$ an integer indicating the total number of proposals in the set), and an empty set $L_1$ of object proposals that are to be retained after the first filtering, the first filtering may for example be performed as follows:

i) in $OP$, the object proposal $op_k$ having the highest classification confidence score is identified, removed from the set $OP$ and instead added to the set $L_1$ of object proposals that are to be kept after the first filtering (e.g. $L_1 \rightarrow L_1 \cup \{op_k\}$; $OP \rightarrow OP - \{op_k\}$);

ii) the proximity measure between the proposal $op_k$ and each of all proposals remaining in the set $OP$ are evaluated (e.g. $\forall op_i \in OP, i \neq k$: calculate $P(b_i, b_k)$), and all proposals that are more proximate to the proposal $op_k$ than a first proximity threshold are discarded. If using e.g. IoU as the proximity measure, the first proximity threshold may be $IoU_{threshold1}$, and all object proposals for which $P(b_i, b_k) > IoU_{threshold1}$ are discarded (e.g. $\forall i \neq k, P(b_i, b_k) > IoU_{threshold1}$: $OP \rightarrow OP - \{op_i\}$);

iii) if there are object proposals remaining in the set $OP$, steps i) and ii) are repeated until $OP$ is empty.

The resulting set $L_1$ then consists of the object proposals that remain after the first filtering.

As part of e.g. an operation S230 of the method 200, the envisaged solution includes to match each subpart (e.g. each of head proposals 330, 331 and 332) with a corresponding one of the object proposals 340-345 remaining after the first filtering. In this particular example, and as illustrated in Figure 3B, this includes matching the head 330 with an object proposal 340a, the head 331 with an object proposal 341a, and the head 332 with an object proposal 342a. When a subpart is matched with an object proposal, the envisaged solution includes to somehow mark/indicate this object proposal such that it is not discarded in a subsequent filtering step.

For example, a function $m(op_i, spp_j)$ may be defined to provide an output indicative of whether the object proposal $op_i$ is to be matched with a subpart proposal $spp_j$. The function $m$ may for example output either "0" (or "false") if there should be no match, or "1" (or "true") if the object and subpart proposals should match. In other examples, the function m may instead return a number indicative of a probability that there is a match, and a decision to match a subpart with an object may be taken by comparing the output from the function $m$ against a threshold value, or similar. The number output from the function $m$ may be referred to as a subpart and object proposal pair matching score, or similar.

Whether to match a particular subpart with a particular object proposal may for example be decided based on an overlap of the subpart proposal (e.g. its bounding box) with that of the object proposal, e.g. the matching score may be proportional to (or include) a value indicative of such an overlap.

In some examples, the decision may be based on a spatial offset between e.g. a location or center point of the subpart proposal and an assumed optimal location or center point of the subpart proposal if the subpart proposal would actually belong to the object proposal, e.g. the matching score may be proportional to (or include) a value indicative of such a spatial offset. For example, if the subpart is a head and the object a person, the decision can be made based on how much the head (e.g. its center point) is spatially offset from an assumed position (e.g. center point) of a real head of the person.

The matching may, in some examples, also be based on the classification confidence score of the object proposal, such that objects that are considered more likely (i.e. that have higher classification confidence scores) are more likely to be matched with a subpart than others, and similar. Likewise, in some examples, the matching may also be based on a localization score of the object proposals, such that object proposals whose indicated positions are considered more likely (or to have less uncertainty) are more likely to be matched with a subpart than others. In some examples, one may for example consider a product of the classification confidence score and localization score for an object proposal, and e.g. compare this product against the spatial offset of the subpart proposal, e.g. by defining a ratio of the product to the spatial offset. Phrased differently, if using the matching score, the matching score may be proportional to (or include) one or more of the classification confidence score, the localization score, the product of the localization score and classification confidence score, the ratio of the product to the spatial offset, or some other suitable combination of one or more of these parameters, and similar.

The matching score may for example be configured to be zero (or very low) if a ratio of an overlap of the subpart proposal and object proposal to an overall size of the subpart proposal is below an object and subpart intersection threshold. For example, a non-zero matching score between object proposal $op_i$ and subpart proposal $opp_j$ may require that

$$\frac{A_{overlap}}{A_{subpart}} > A_{opsppthr},$$

where $A_{overlap}$ is the overlap area between the subpart and object proposals, $A_{subpart}$ is the area of the subpart (as identified in the image), and $A_{opsppthr}$ is the object and subpart intersection threshold. Phrased differently, it may be required for a match that e.g. at least X % of the subpart area overlaps the object for there to be a match between the two.

As one example, the function $m(op_i, spp_j)$ and matching score may be implemented/defined as follows:

i) the intersection (or overlap) area of the corresponding bounding boxes are calculated, e.g. by defining

$$A_{overlap} = [\min(x_{iR}, x_{jR}) - \max(x_{iL}, x_{jL})] \times [\min(y_{iB}, y_{jB}) - \max(y_{iT}, y_{jT})],$$

where $(x_{iL}, y_{iT})$ and $(x_{iR}, y_{iB})$ are the top-left and bottom-right coordinates of the bounding box of the object proposal $op_i$ and where $(x_{jL}, y_{jT})$ and $(x_{jR}, y_{jB})$ those of the subpart proposal $spp_j$;

ii) the subpart area is calculated as $A_{subpart} = (x_{jR} - x_{jL}) \times (y_{jB} - y_{jT})$;

iii) if $A_{overlap}/A_{subpart}$ is below $A_{opsppthr}$, a zero (or very low) matching score is returned, otherwise it is continued to iv);

iv) a center point $(xc_j, yc_j)$ of the subpart proposal is defined, e.g. as

$$\left(xc_j, y_{cj}\right) = (x_{jL}, y_{jB}) + \left(x_{jR} - x_{jL}, y_{jB} - y_{jT}\right)/2.$$

v) an "optimal" subpart position $(xo_j, yo_j)$ is defined, e.g., in case of a head,

$$\left(xo_j, yo_j\right) = (x_{iL}, y_{iT}) + [\alpha(x_{iR} - x_{iL}), \beta(y_{iB} - y_{iT})],$$

where $\alpha$ and $\beta$ indicates where on the body the head is optimally located, e.g. such that $\alpha = 1/2$ and $\beta = 1/10$, or similar;

vi) based on the outcome of iv) and v), a subpart offset is calculated as

$$\Delta_j = \left(xo_j - xc_j\right)^2 + \left(yo_j - yc_j\right)^2,$$

or similar, and

vii) the matching score $m(op_i, spp_j)$ is calculated and returned, e.g. as

$$m\left(op_i, spp_j\right) = \frac{SC_i * SL_i}{\Delta_j},$$

where $SC_i$ is the classification confidence score for the object and $SL_i$ is the localization score for the position of the object as described earlier herein.

The object proposal with which the subpart proposal $spp_j$ is to be matched may be selected to be the object proposal $op_l \in L_1$ for which the matching score $m(op_l, spp_j)$ is highest. For example, for a set $SPP = \{spp_1, spp_2, ..., spp_M\}$ of subpart proposals (where $spp_i$ is the $i$:th such subpart proposal, and where $M$ is an integer indicating the total number of subpart proposals), the matching and operation S230 may proceed as follows (starting from an empty set $M$ of object proposals that are matched with a corresponding subpart):

i) for each subpart proposal, matching scores for each remaining object proposal are calculated (e.g. $\forall spp_j \in SPP$: $\forall op_i \in L_1$: calculate $m(op_i, spp_j)$), and the object proposal $op_l \in L_1$ resulting in the highest matching score is identified and selected as the match. The object proposal $op_l$ is added to the set $M$ (e.g. $M \rightarrow M \cup \{op_l\}$);

To avoid matching of a same subpart proposal with more than one object proposal, an object proposal that has been added to the set $M$ may for example also be removed from the set $L_1$, or the matching may operate on another set $L_1$' instead of $L_1$, wherein $L_1$' is initially populated with the elements of the set $L_1$, but where elements may be removed (in response to being matched to a subpart) from the set $L_1'$ without also being removed from the set $L_1$. To avoid matching of two or more subpart proposals with a same object proposals, similar measures may be used. If two object proposals are given the same highest matching score for a same subpart proposal, one may e.g. decide to match the subpart with the first object for which the matching score was calculated, or to e.g. randomly select one of the objects, or similar. Preferably, as long as a one-to-one matching of subpart and object proposals is achieved, the exact type of matching algorithm (global, e.g. Hungarian, greedy, etc.) is of less importance.

Matching a subpart to an object may in some examples require that the matching score considered to be highest is still above a predefined threshold value. If a subpart proposal does not generate a sufficiently high matching score with any one of the object proposals, the subpart may then be disregarded.

It is to be noted that the algorithm for matching of subpart proposals to object proposals remaining after the first filtering is just one of many possible examples. The important thing is that there is a matching between subpart proposals and object proposals, such that the matched object proposals can be retained even if at least partially hidden behind one or more other object proposals, such as would be the case if e.g. there are two or more objects located closely together in the image of the scene.

After having matched the subpart proposals with one or more of the object proposals, or if having determined that there is no suitable matching object for any of the subpart proposals, the envisaged solution includes to perform a second filtering (e.g. as part of an operation S240 of the method 200), wherein this filtering is (statistically) more aggressive than the first filtering and requires less proximity than the first filtering in order to discard an object proposal having a lower classification confidence score than that of another object proposal. The second filtering may also rely on e.g. NMS, and may for example use IoU as the proximity score measure but with an IoU threshold that is lower than that used in the first filtering. Phrased differently, the second filtering is such that in order for an object proposal to be discarded, the object proposal needs to be more proximate to the object proposal having the higher classification confidence score than in the first filtering, i.e. more proximate than a second proximity threshold lower than the first proximity threshold used in the first filtering. For example, if using IoU as the proximity measure, discarding an object proposal $op_i$ in the second filtering may require that $IoU(op_i, op_k) > IoU_{threshold2} < IoU_{threshold1}$, where $IoU_{threshold2}$ is the second proximity threshold used for the second filtering.

The second filtering may for example be performed similarly to the first filtering, but starting with the set $L_1$ instead of the set $OP$ of object proposals, and by using the threshold $IoU_{threshold2}$ instead of the threshold $IoU_{threshold1}$. However, the second filtering is such that an object proposal that has been matched with a subpart proposal as part of the operation S230 is not discarded. For example, if the set $M$ includes the object proposals which has been matched with a subpart proposal, discarding of an object proposal $op_i$ in the second filtering may require both that i) the proximity measure $P(op_i, op_k) > IoU_{threshold2}$ and ii) that the object proposal $op_i$ is not in the list $M$. In other examples, following the outline of the first filtering, the starting set of object proposals to be kept/retained after the second filtering (e.g. a set $L_2$) may not be empty, but include already the elements of $M$. In some examples, a size of the detected subpart in the image of the scene may first be checked to confirm that the size is above a size threshold, before matching of the subpart with an object. Subparts that are considered too small may be ignored, as a false positive ratio for detection of such subparts may be high due to e.g. the limit number of pixels available for detection of the subpart. Phrased differently, it may be assumed that it is harder to detect smaller subparts, either because the subparts are actually small in the scene, and/or because the subparts are small in the image of the scene due to being far from the camera capturing the image of the scene, and the envisaged solution may avoid to match proposals for such subparts with object proposals as there may be an increased risk that the alleged subparts are false positive detection. As generally envisaged herein, in some examples, various gating measures may be implemented, such that e.g. a subpart proposal is not considered for matching with an object proposal if a size of the subpart proposal is below a particular threshold. Likewise, instead or in addition, an object proposal may not be considered for matching if its size is below some other particular threshold, or similar. In yet other examples, gating measures may be implemented also based on relative size differences between object and subpart proposals, such that e.g. larger object proposals are not matched with smaller subpart proposals and/or vice versa.

Figure 3C schematically illustrates the outcome of completing operation S240, wherein the set of object proposals $L_2$ retained after the second filtering includes the object proposals 340a (for person 310), 342a (for person 312), 343a (for person 313), 344a (for person 314), and 345a (for person 315), similarly to the result of the conventional procedure described with reference to Figures 1A-1D. However, in addition, the set $L_2$ also includes the object proposal 341a for person 311, and the envisaged solution thus manages to correctly detect also the person 311. This because the matching of the head 331 to the object proposal 341a as part of operation S230 prevented the object proposal 341a from being discarded as part of the second filtering. In the second filtering, the second proximity threshold (e.g. $IoU_{threshold2}$) may for example be the same threshold $IoU_{threshold}$ as used in the conventional process described with reference to Figures 1A-1D. For example, if a threshold is found that works well in situations not including partially overlapping (or close) objects, this threshold may be used as the second proximity threshold.

As is noted from Figure 3C, the envisaged solution does not negatively affect the filtering of object proposals to which there is no matching subpart. For example, the persons 313, 314 and 315 are each detected as they should be. Likewise, the envisaged solution does not negatively affect the detection of an object that is not overlapped at least partially by some other object, such as the person 312, even though a matching head 332 was provided for the person 312. In conclusion, the envisaged solution is thus capable of performing at least as successful as the conventional solution, with the added benefit that it also accurately captures/detects the partially overlapped person 311 that is standing close together to the person 310, and that was not accurately detected by the conventional solution due to the NMS with the lower IoU threshold discarding the corresponding object proposal due to its lower classification confidence score and large overlap/IoU with the person 310.

In some examples, it is envisaged that the statistical aggressiveness of the first filtering (e.g. $IoU_{threshold1}$) may be adjusted dynamically based on a current situation of the scene depicted in an image. For example, the number of detected subparts (i.e. the number of subpart proposals) may be used as an indication of how likely it is that there are objects that are located close to, and at least partially overlapping, each other. In other examples, a distance between locations of the subpart proposals in the image may instead, or also, be used for such an adaptive adjustment of the first filtering. For example, one may calculate an average distance between subpart proposals, and e.g. require closer proximity to discard an object proposal as part of the first filtering if the average distance between subparts is shorter, and e.g. require less proximity to discard an object proposal as part of the first filtering if the average distance is longer, and similar. This is based on the assumption that if the average distance between subparts is smaller, there are likely more objects located closer together (i.e. the density of subparts is higher), and the first filtering should then retain a larger number of object proposals in order not to discard an object proposal belonging to a partially hidden object in favor of an object proposal for the hiding object.

Although having been exemplified above mainly using NMS and IoU, the first and/or second filtering may also be implemented using one or more alternatives to NMS. For example, an alternative to NMS may be "Confluence" as presented in the above-referred to article by A. Shepley et al. There, the envisaged algorithm performs filtering based on a single score $P_w(b_i)$ formed by a proximity score $P(b_i)$ of the bounding box $b_i$ weighted by one minus the classification confidence score, e.g. such that

$$P_w(b_i) = P(b_i) \times (1 - SC_i),$$

where $P(b_i)$ is a mean value of the proximities of the box $b_i$ to all boxes $O(b_i)$ that are considered "confluent" with the box $b_i$, e.g. such that

$$P(b_i) = \frac{1}{|O(b_i)|} \sum_{b_j \in O(b_i)} P(b_i, b_j).$$

In such a solution, the first filtering may include to use a higher threshold for deciding that another box is confluent with $b_i$ (thus making the first filtering less aggressive), and the second filtering may include to use a lower threshold for deciding that another box is confluent with $b_i$ (thus making the second filtering more aggressive), or similar.

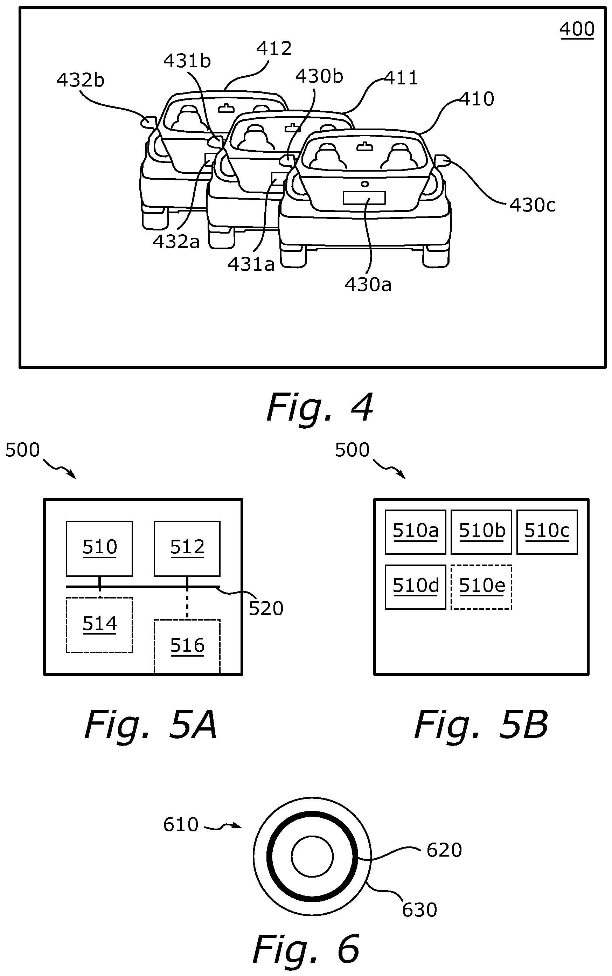

Figure 4 schematically illustrates an image 400 of another example scene for which the envisaged solution can be used, and wherein the objects and subparts are not persons and heads, respectively. In the image 400, there are depicted three automobiles 410, 411 and 412. Using e.g. a conventional NMS-based methodology, it is likely that the object proposal corresponding to e.g. automobile 411 would be discarded, as the corresponding bounding box would have substantial overlap (as measured using e.g. IUO) with that of the automobile 410, and because the classification confidence score for the object proposal corresponding to the automobile 410 would likely be higher than that of the automobile 411. By using the envisaged solution, subparts such as e.g. sideview mirrors 430a, 431a, 432a, 430c and/or license plates 431a, 431b, 431c, and similar (such as head-, or tail-, lights, wheels, etc.), for the respective automobiles 410, 411, 412 and 430c could be detected and used to retain the object proposal(s) with which they match, thus improving on the conventional situation and leading to an increased recall. Of course, for such other subparts, the algorithm used to match a subpart with a corresponding object may need to be modified compared to that used for matching heads with persons. Figure 4 serves to illustrate that the envisaged solution is not only limited to detection of persons using their heads, but also applies for other objects and subparts as long as it is possible to match the subpart with the object. In particular, as generally envisaged herein, the envisaged solution uses the fact that it may often be easier to identify-/detect/locate subparts in an image than corresponding objects. For example, an ANN-based object detector may be better at detecting heads than bodies, and this may be used to avoid discarding of the corresponding bodies as part of one or more filtering steps of the NMS process.

Figure 5A schematically illustrates one or more examples of a device 500 for performing a method as envisaged herein, i.e. a device (such as a camera) configured to perform the method 200 described with reference to Figure 2. The device 500 includes at least a processor (or "processing circuitry") 510 and optionally a memory 512. As used herein, a "processor" or "processing circuitry" may for example be any combination of one or more of a suitable central processing unit (CPU), multiprocessor, microcontroller (μC), digital signal processor (DSP), application-specific integrated circuit (ASIC), field-programmable gate-array (FPGA), graphics processing unit (GPU), etc., capable of executing software instructions stored in the memory 512. The memory 512 may be external to the processor 510, or may be internal to the processor 510. As used herein, a "memory" may be any combination of random-access memory (RAM) and read-only memory (ROM), or any other kind of memory capable of storing the instructions. The memory 512 contains (i.e. stores) instructions that, when executed by the processor 510, cause the device 500 to perform a method as described herein (i.e. the method 200 or any embodiments thereof). The device 500 may further include one or more additional items 514 which may, in some situations, be useful for performing the method. In some example embodiments, the device 500 may for example be a (video) camera, such as a (video) monitoring camera, and the additional item(s) 514 may then include e.g. an image sensor and for example one or more lenses for focusing light from a scene on the image sensor, such that the monitoring camera may capture images of a scene as part of performing the envisaged method. The additional item(s) 514 may also include e.g. various other electronics components needed for capturing the scene, e.g. to properly operate the image sensor and/or lenses as desired. Performing the method in a monitoring camera may be useful in that the processing is moved to "the edge", i.e. closer to where the actual scene is captured compared to if performing e.g. image analysis somewhere else (such as at a more centralized processing server or similar).

The device 500 may for example be connected to a network such that the results from performing the method may be transmitted to e.g. a user/operator, and/or to another device such as a server, or similar. For this purpose, the device 500 may include a network interface 516, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 516 may for example also support any other wireless standard capable of transferring encoded video, such as e.g. Bluetooth or similar. The various components 510, 512, 514 and 516 (if present) may be connected via one or more communication buses 520, such that these components may communicate with each other, and exchange data as required.

The device 500 may for example be a monitoring camera mounted or mountable on a building, e.g. in form of a PTZ-camera or e.g. a fisheye-camera capable of providing a wider perspective of the scene, or any other type of monitoring/surveillance camera. The device 500 may for example be a body camera, action camera, dashcam, or similar, suitable for mounting on persons, animals and/or various vehicles, or similar. The device 500 may for example be a smartphone or tablet which a user can carry and film a scene. In any such examples of the device 500, it is envisaged that the device 400 may include all necessary components (if any) other than those already explained herein, as long as the device 500 is still able to perform the method 200 or any embodiments thereof as envisaged herein. The various components of the device 500 may in some examples be further configured to implement the various one or more ANN architectures/entities as described herein, to provide the plurality of object and subpart proposals, and to e.g. implement the various operations (e.g. S210, s220, S230, S240) of the method 200. In other examples, the device 500 may be distributed across multiple physical and/or logical entities, to form e.g. a computer system or similar, wherein two or more of the operations (and/or two or more different suboperations of a same operation) may be performed on/by different physical and/or logical entities, e.g. as part of a distributed computing process or similar. In yet other examples, the device 500 may not perform e.g. the object and/or subpart detection itself, but instead receive the corresponding proposals (using e.g. the interface 516) from one or more other entities configured to perform such detection. As envisaged herein, it is sufficient if the device 500 may somehow obtain the various object and subpart proposals, and to then perform the post-processing thereof in order to identify which object proposals to discard and which to retain to more accurately detect objects in the image of the scene.

Figure 5B schematically illustrates one or more embodiments of the device 500 in terms of a number of functional/computing blocks 510a, 510b, 510c, and 510d. Each such block 510a-510d is responsible for performing a functionality in accordance with a particular operation of the method 200, as shown in the flowchart of Figure 2. For example, one such functional block 510a may be configured to obtain (as in operation S210) the object and subpart proposals, either from some other entity and/or by performing the object and subpart detection itself. The block 510a may be referred to as an obtaining block/module, an obtainer, a detector block/module, a detector, and similar. Another block 510b may be configured to perform (as in operation S220) the first filtering of the object proposals. The block 510b may be referred to as a first filtering block/module, a first filter, and similar. Another block 510c may be configured to match (as in operation S230) the subpart proposals with the object proposals remaining after the first filtering. The block 510c may be referred to as a matching block/module, a matcher, and similar. Another block 510d may be configured to perform (as in operation S240) the second filtering as described herein. The block 510d may be referred to as a second filtering block/module, a second filter, and similar. The device 500 may optionally include e.g. one or more additional function blocks 510e, such as e.g. a block for implementing the ANN-based object and/or subpart detection (if this is not performed in/by the block 510a or obtained from some other entity external to the device 500), or similar.

In general terms, each functional block 510a-e may be implemented in hardware or in software. Preferably, one or more or all functional blocks 510a-e may be implemented by the processing circuitry 510, possibly in cooperation with the storage medium/memory 512 and/or the communications interface 516. The processing circuitry 510 may thus be arranged to from the memory 512 fetch instructions as provided by a functional block 510a-e, and to execute these instructions and thereby perform any operations of the method 200 performed by/in the device 500 as disclosed herein.

Figure 6 schematically illustrates a computer program product 610 including a computer-readable means/storage medium 630. On the computer storage medium 630, a computer program 620 (including computer code) can be stored, which computer program 620 can cause (when the code is executed) the processor 510 and thereto operatively coupled entities and devices, such as the communications interface 516 and the memory 512, of the device 500 to execute method 200 according to embodiments described herein with reference to e.g. Figures 2, 3A-3C and 4. The computer program 620 and/or computer program product 610 may thus provide means for performing any operations of the method 200 performed by the device 500 as disclosed herein.

In the example of Figure 6, the computer program product 610 and computer-readable storage medium 630 are illustrated as an optical disc, such as a CD (compact disc) or a DVD (digital versatile disc) or a Blu-Ray disc. The computer program product 610 and computer-readable storage medium 630 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 may be stored in any way which is suitable for the computer program product 610 and computer-readable storage medium 630.

In summary of all of the above, the present disclosure improves upon contemporary technology by providing a solution for object detection, and in particular for post-processing of data output from an object detector, wherein the detection of subparts (such as heads) in the image is used to understand which objects that are to be retained even if they are at least partially hidden behind some other object, as a result of matching the subpart and object (proposals). The envisaged solution envisages to perform two filtering operations with different levels of statistical aggressiveness (e.g. using different proximity thresholds), and the intermediate matching of subpart and object proposals enables to use a relatively high aggressiveness for the second filtering such that a large number of false positives may be avoided, but where the matching is used to still keep the recall at a sufficiently high level. In general, the envisaged solution described herein allows for better detection of objects close to each other in an image, and may also lead to e.g. improved overall tracking accuracy and be particularly useful in use cases such as object counting and similar.

Variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

**List of reference numerals**

| | |
|---|---|
| 100 | Image of scene |
| 110-115 | Objects (persons) |
| 116 | Tree |
| 120-125 | Object proposals |
| 120a-125a | Most relevant object proposals |
| 200 | Method for object detection (post-processing) |
| S210 | Obtaining operation |
| S220 | First filtering operation |
| S230 | Matching operation |
| S240 | Second filtering operation |
| 300 | Image of scene |
| 310-315 | Objects (persons) |
| 316 | Tree |
| 320-325 | Object proposals |
| 330-332 | Subpart proposals (heads) |
| 340-345 | Object proposals after first filtering |

| 340a-345a | Most relevant object proposals |
| 400 | Image of scene |
| 410-412 | Objects (automobiles) |
| 430a-432a, 430c | Subpart proposals (sideview mirrors) |
| 430b-432b | Subpart proposals (license plates) |
| 500 | Device |
| 510 | Processor/processing circuitry |
| 512 | Memory |
| 514 | Optional entities |
| 516 | Communications interface |
| 510a-510e | Functional blocks |
| 610 | Computer program product |
| 620 | Computer program |
| 630 | Computer-readable storage medium |

**Claims**

1. A method (200) of object detection in an image (300), comprising:

    - obtaining (S210), from one or more artificial neural network, ANN, entities trained to localize objects and one or more subparts of such objects in images, a plurality of object proposals (320-325) and one or more subpart proposals (330-332) in a same image (300);
    - performing (S220) a first filtering of the object proposals;
    - for each subpart proposal, matching (S230) the subpart proposal with a corresponding one of one or more object proposals (340-345) remaining after the first filtering, and
    - performing (S240) a second filtering of the one or more object proposals remaining after the first filtering and not matched with any one of the one or more subpart proposals,

    wherein the first filtering and the second filtering are based on classification confidence scores and proximity scores of the object proposals, and wherein the second filtering is statistically more aggressive than the first filtering, such that to discard an object proposal having a lower classification confidence score than another object proposal using the second filtering requires less proximity than if using the first filtering.

2. The method according to claim 1, wherein the objects are persons and/or animals and wherein the subparts are heads of such persons and/or animals.

3. The method according to claim 1 or 2, wherein the proximity scores of the object proposals are found using intersection-over-union, IOU, and/or Manhattan distance.

4. The method according to any one of claims 1 to 3, wherein at least one of the first filtering and the second filtering is based on non-maximum suppression, NMS.

5. The method according to any one of the preceding claims, comprising filtering, as part of said matching, the one or more object proposals remaining after the first filtering based on their spatial overlap with the subpart proposal.

6. The method according to any one of the preceding claims, wherein said matching comprises calculating a subpart and object proposal pair matching score (m), and to match the subpart with the object proposal having the highest such matching score.

7. , The method according to claim 6, wherein the matching score depends on a spatial offset between a location or center point of the subpart proposal and an assumed optimal location or center point of the subpart proposal if belonging to the object proposal.

8. The method according to claim 6 or 7, wherein the matching score further depends on at least one of the classification confidence score ($SC_i$) for the object proposal and a localization score ($SL_i$) for the object proposal.

9. The method according to claims 7 and 8, wherein the matching score is equal or at least proportional to a ratio of a product of the classification confidence score and localization score for the object proposal to the spatial offset.

10. The method according to any one of claims 6 to 9, wherein the matching score is such that matching of an object proposal with a subpart proposal is avoided if a ratio of an overlap of the subpart proposal and object proposal to an overall size of the subpart proposal is below an object and subpart intersection threshold.

11. The method according to any one of the preceding claims, wherein a statistical aggressiveness of the first filtering depends on a distance between locations of the subpart proposals, wherein the statistical aggressiveness of the first filtering decreases with a decreasing such distance and increases with an increasing such distance.

12. A device (500), comprising processing circuitry (510) configured to:

  - obtain, from one or more artificial neural network, ANN, entities trained to localize objects and one or more subparts of such objects in images, a plurality of object proposals and one or more subpart proposals in a same image;
  - perform a first filtering of the object proposals;
  - for each subpart proposal, match the subpart proposal with a corresponding one of one or more object proposals remaining after the first filtering, and
  - perform a second filtering of the one or more object proposals remaining after the first filtering and not matched with any one of the one or more subpart proposals,

  wherein the first filtering and the second filtering are based on classification confidence scores and proximity scores of the object proposals, and wherein the second filtering is statistically more aggressive than the first filtering, such that to discard an object proposal having a lower classification confidence score than another object proposal using the second filtering requires less proximity of the object proposals than to discard the object proposal having the lower classification confidence score than the other object proposal using the first filtering.

13. The device according to claim 12, wherein the device is a monitoring camera.

14. A computer program (620) comprising computer code that, when run on processing circuitry (510) of a device (500), causes the device to:

  - obtain, from one or more artificial neural network, ANN, entities trained to localize objects and one or more subparts of such objects in images, a plurality of object proposals and one or more subpart proposals in a same image;
  - perform a first filtering of the object proposals;
  - for each subpart proposal, match the subpart proposal with a corresponding one of one or more object proposals remaining after the first filtering, and
  - perform a second filtering of the one or more object proposals remaining after the first filtering and not matched with any one of the one or more subpart proposals,

  wherein the first filtering and the second filtering are based on classification confidence scores and proximity scores of the object proposals, and wherein the second filtering is statistically more aggressive than the first filtering, such that to discard an object proposal having a lower classification confidence score than another object proposal using the second filtering requires less proximity of the object proposals than to discard the object proposal having the lower classification confidence score than the other object proposal using the first filtering.

15. A computer program product (610), comprising a computer-readable storage medium (630) on which the computer program (620) according to claim 14 is stored.

**Patentansprüche**

1. Verfahren (200) zur Objekterkennung in einem Bild (300), Folgendes umfassend:

  - Erhalten (S210), einer oder mehreren ANN(artificial neural network - künstliches neuronales Netzwerk)-Entitäten, die zum Lokalisieren von Objekten und einem oder mehreren Teilen derartiger Objekte in Bildern trainiert sind, einer Mehrzahl von Objektvorschlägen (320-325) und von einem oder mehreren Teilvorschlägen (330-332) in demselben Bild (300);
  - Durchführen (S220) eines ersten Filterns der Objektvorschläge;

für jeden Teilvorschlag, Zuordnen (S230) des Teilvorschlags zu einem entsprechenden von einem oder mehreren Objektvorschlägen (340-345), die nach dem ersten Filtern verbleiben, und
- Durchführen (S240) eines zweiten Filterns des einen oder der mehreren Objektvorschläge, die nach dem ersten Filtern verbleiben und nicht zu einem beliebigen von dem einen oder den mehreren Teilvorschlägen zugeordnet wurden, wobei das erste Filtern und das zweite Filtern auf Klassifizierungskonfidenzwerten und Ähnlichkeitswerten der Objektvorschläge basieren und wobei das zweite Filtern statistisch strenger als das erste Filtern ist, so dass Verwerfen eines Objektvorschlags, der einen niedrigeren Klassifizierungskonfidenzwert als ein anderer Objektvorschlag aufweist, unter Verwendung des zweiten Filterns eine geringere Ähnlichkeit erfordert als unter Verwendung des ersten Filterns.

2. Verfahren nach Anspruch 1, wobei die Objekte Personen und/oder Tiere sind und wobei die Teile Köpfe derartiger Personen und/oder Tiere sind.

3. Verfahren nach Anspruch 1 oder 2, wobei die Ähnlichkeitswerte der Objektvorschläge unter Verwendung von Schnittmenge-über-Vereinigungsmenge (intersection-over-union - IOU) und/oder die Manhattan-Distanz gefunden werden.

4. Verfahren nach einem der Ansprüche 1 bis 3, wobei mindestens eines von dem ersten Filtern und dem zweiten Filtern auf Unterdrückung nicht-maximaler Detektionen (non-maximum suppression - NMS) basiert.

5. Verfahren nach einem der vorhergehenden Ansprüche, umfassend Filtern, als Teil des Zuordnens, des einen oder der mehreren Objektvorschläge, die nach dem ersten Filtern verbleiben, basierend auf deren räumlicher Überlappung mit dem Teilvorschlag.

6. Verfahren nach einem der vorhergehenden Ansprüche, wobei das Zuordnen Berechnen eines Zuordnungswerts eines Paars aus Teil und Objektvorschlag (m) und Zuordnen des Teils zu dem Objektvorschlag mit dem höchsten derartigen Zuordnungswert umfasst.

7. Verfahren nach Anspruch 6, wobei der Zuordnungswert von einem räumlichen Versatz zwischen einer Position oder einem Mittelpunkt des Teilvorschlags und einer/m angenommenen optimalen Position oder Mittelpunkt des Teilvorschlags, wenn er zu dem Objektvorschlag gehört, abhängt.

8. Verfahren nach Anspruch 6 oder 7, wobei der Zuordnungswert ferner mindestens einem von dem Klassifizierungskonfidenzwert ($SC_i$) für den Objektvorschlag und einem Lokalisierungswert ($SL_i$) für den Objektvorschlag abhängt.

9. Verfahren nach den Ansprüchen 7 und 8, wobei der Zuordnungswert gleich oder zumindest proportional zu einem Verhältnis aus einem Produkt aus dem Klassifizierungskonfidenzwert und dem Lokalisierungswert für den Objektvorschlag zu dem räumlichen Versatz ist.

10. Verfahren nach einem der Ansprüche 6 bis 9, wobei der Zuordnungswert dazu eingerichtet ist, dass Zuordnen eines Objektvorschlags zu einem Teilvorschlag vermieden wird, wenn ein Verhältnis einer Überlappung des Teilvorschlags und des Objektvorschlags zu einer Gesamtgröße des Teilvorschlags unter einem Schwellenwert der Schnittmenge aus Objekt und Teil liegt.

11. Verfahren nach einem der vorhergehenden Ansprüche, wobei eine statistische Strenge des ersten Filterns von einem Abstand zwischen Positionen der Teilvorschläge abhängt, wobei die statistische Strenge des ersten Filterns mit einem Abnehmen eines derartigen Abstands abnimmt und mit einem Zunehmen eines derartigen Abstands zunimmt.

12. Vorrichtung (500), umfassend eine Verarbeitungsschaltungsanordnung (510), die zu Folgendem ausgelegt ist:

- Erhalten, von einer oder mehreren ANN(artificial neural network - künstliches neuronales Netz)-Entitäten, die zum Lokalisieren von Objekten und einem oder mehreren Teilen derartiger Objekte in Bildern trainiert sind, einer Mehrzahl von Objektvorschlägen und einem oder mehreren Teilvorschlägen in demselben Bild;
- Durchführen eines ersten Filterns der Objektvorschläge;
- für jeden Teilvorschlag, Zuordnen des Teilvorschlags zu einem entsprechenden von einem oder mehreren Objektvorschlägen, die nach dem ersten Filtern verbleiben, and
- Durchführen eines zweiten Filterns des einen oder der mehreren Objektvorschläge, die nach dem ersten Filtern verbleiben und keinem von dem einen oder den mehreren Teilvorschlägen zugeordnet werden,

wobei das erste Filtern und das zweite Filtern auf Klassifizierungskonfidenzwerten und Ähnlichkeitswerten der Objektvorschläge basieren und wobei das zweite Filtern statistisch strenger als das erste Filtern ist, so dass Verwerfen eines Objektvorschlags, der einen niedrigeren Klassifizierungskonfidenzwert als ein anderer Objektvorschlag aufweist, unter Verwendung des zweiten Filterns eine geringere Ähnlichkeit der Objektvorschläge erfordert als Verwerfen des Objektvorschlags, der den niedrigeren Klassifizierungskonfidenzwert als der andere Objektvorschlag aufweist, unter Verwendung des ersten Filterns.

13. Vorrichtung nach Anspruch 12, wobei die Vorrichtung eine Überwachungskamera ist.

14. Computerprogramm (620), umfassend Computercode, der, wenn er auf der Verarbeitungsschaltungsanordnung (510) einer Vorrichtung (500) läuft, die Vorrichtung zu Folgendem veranlasst:

- Erhalten, von einer oder mehreren ANN(artificial neural network - künstliches neuronales Netzwerk)-Entitäten, die zum Lokalisieren von Objekten und einem oder mehreren Teilen derartiger Objekte in Bildern trainiert sind, einer Mehrzahl von Objektvorschlägen und einem oder mehreren Teilvorschlägen in demselben Bild;
- Durchführen eines ersten Filterns der Objektvorschläge;
- für jeden Teilvorschlag, Zuordnen des Teilvorschlags zu einem entsprechenden von einem oder mehreren Objektvorschlägen, die nach dem ersten Filter verbleiben, und
- Durchführen eines zweiten Filterns des einen oder der mehreren Objektvorschläge, die nach dem ersten Filter verbleiben und keinem beliebigen von dem einen oder den mehreren Teilvorschlägen zugeordnet werden,

wobei das erste Filtern und das zweite Filtern auf Klassifizierungskonfidenzwerten und Ähnlichkeitswerten der Objektvorschläge basieren und wobei das zweite Filtern statistisch strenger als das erste Filtern ist, so dass Verwerfen eines Objektvorschlags, der einen niedrigeren Klassifizierungskonfidenzwert als ein anderer Objektvorschlag aufweist, unter Verwendung des zweiten Filterns eine geringere Ähnlichkeit der Objektvorschläge erfordert als Verwerfen des Objektvorschlags, der den niedrigeren Klassifizierungskonfidenzwert als der andere Objektvorschlag aufweist, unter Verwendung des ersten Filterns.

15. Computerprogrammprodukt (610), umfassend ein computerlesbares Speichermedium (630), auf dem das Computerprogramm (620) nach Anspruch 14 gespeichert ist.

## Revendications

1. Procédé (200) de détection d'objets dans une image (300), comprenant :

- l'obtention (S210), à partir d'une ou plusieurs entités de réseaux de neurones artificiels, ANN, entraînées pour localiser des objets et une ou plusieurs sous-parties de tels objets dans des images, d'une pluralité de propositions d'objets (320-325) et d'une ou plusieurs propositions de sous-partie (330-332) dans une même image (300) ;
- l'exécution (S220) d'un premier filtrage des propositions d'objets ;
- pour chaque proposition de sous-partie, la mise en correspondance (S230) de la proposition de sous-partie avec une proposition correspondante parmi une ou plusieurs propositions d'objets (340-345) restant après le premier filtrage, et
- l'exécution (S240) d'un second filtrage de la ou des propositions d'objets restant après le premier filtrage et non appariées à l'une quelconque de la ou des propositions de sous-partie,

dans lequel le premier filtrage et le second filtrage sont basés sur des scores de confiance de classification et des scores de proximité des propositions d'objets, et dans lequel le second filtrage est statistiquement plus agressif que le premier filtrage, de sorte que le rejet d'une proposition d'objet ayant un score de confiance de classification inférieur à celui d'une autre proposition d'objet utilisant le second filtrage nécessite moins de proximité que si l'on utilise le premier filtrage.

2. Procédé selon la revendication 1, dans lequel les objets sont des personnes et/ou des animaux et dans lequel les sous-parties sont des têtes de ces personnes et/ou animaux.

3. Procédé selon la revendication 1 ou 2, dans lequel les scores de proximité des propositions d'objets sont trouvés en utilisant une intersection sur union, IOU et/ou une distance de Manhattan.

**4.** Procédé selon l'une quelconque des revendications 1 à 3, dans lequel au moins l'un du premier filtrage et du second filtrage est basé sur une suppression non maximale, NMS.

**5.** Procédé selon l'une quelconque des revendications précédentes, comprenant le filtrage, dans le cadre de ladite mise en correspondance, de la ou des propositions d'objets restant après le premier filtrage sur la base de leur chevauchement spatial avec la proposition de sous-partie.

**6.** Procédé selon l'une quelconque des revendications précédentes, dans lequel ladite mise en correspondance comprend le calcul d'une sous-partie et d'un score de mise en correspondance de paire de propositions d'objets (m), et la mise en correspondance de la sous-partie avec la proposition d'objet ayant le score de mise en correspondance le plus élevé.

**7.** Procédé selon la revendication 6, dans lequel le score de mise en correspondance dépend d'un décalage spatial entre un emplacement ou un point central de la proposition de sous-partie et un emplacement optimal supposé ou un point central de la proposition de sous-partie s'il appartient à la proposition d'objet.

**8.** Procédé selon la revendication 6 ou 7, dans lequel le score de mise en correspondance dépend en outre d'au moins l'un du score de confiance de classification ($SC_i$) pour la proposition d'objet et d'un score de localisation ($SL_i$) pour la proposition d'objet.

**9.** Procédé selon les revendications 7 et 8, dans lequel le score de mise en correspondance est égal ou au moins proportionnel à un rapport d'un produit du score de confiance de classification et du score de localisation pour la proposition d'objet par rapport au décalage spatial.

**10.** Procédé selon l'une quelconque des revendications 6 à 9, dans lequel le score de mise en correspondance est tel que la mise en correspondance d'une proposition d'objet avec une proposition de sous-partie est évitée si un rapport d'un chevauchement de la proposition de sous-partie et de la proposition d'objet par rapport à une taille globale de la proposition de sous-partie est inférieur à un seuil d'intersection d'objet et de sous-partie.

**11.** Procédé selon l'une quelconque des revendications précédentes, dans lequel une agressivité statistique du premier filtrage dépend d'une distance entre des emplacements des propositions de sous-partie, dans lequel l'agressivité statistique du premier filtrage diminue avec une telle distance décroissante et augmente avec une telle distance croissante.

**12.** Dispositif (500), comprenant des circuits de traitement (510) configurés pour :

- obtenir, à partir d'une ou plusieurs entités de réseaux de neurones artificiels, ANN, entraînées pour localiser des objets et une ou plusieurs sous-parties de tels objets dans des images, une pluralité de propositions d'objets et une ou plusieurs propositions de sous-partie dans une même image ;
- exécuter un premier filtrage des propositions d'objets ;
- pour chaque proposition de sous-partie, mettre en correspondance la proposition de sous-partie avec une proposition correspondante parmi une ou plusieurs propositions d'objets restant après le premier filtrage, et
- exécuter un second filtrage de la ou des propositions d'objets restant après le premier filtrage et non appariées à l'une quelconque de la ou des propositions de sous-partie,

dans lequel le premier filtrage et le second filtrage sont basés sur des scores de confiance de classification et des scores de proximité des propositions d'objets, et dans lequel le second filtrage est statistiquement plus agressif que le premier filtrage, de sorte que le rejet d'une proposition d'objet ayant un score de confiance de classification inférieur à celui d'une autre proposition d'objet utilisant le second filtrage nécessite moins de proximité des propositions d'objets que le rejet de la proposition d'objet ayant le score de confiance de classification inférieur à celui de l'autre proposition d'objet utilisant le premier filtrage.

**13.** Dispositif selon la revendication 12, le dispositif étant une caméra de surveillance.

**14.** Programme d'ordinateur (620) comprenant un code informatique qui, lorsqu'il est exécuté sur des circuits de traitement (510) d'un dispositif (500), amène le dispositif à :

- obtenir, à partir d'une ou plusieurs entités de réseaux de neurones artificiels, ANN, entraînées pour localiser des objets et une ou plusieurs sous-parties de tels objets dans des images, une pluralité de propositions d'objets et une ou plusieurs propositions de sous-partie dans une même image ;
- exécuter un premier filtrage des propositions d'objets ;
- pour chaque proposition de sous-partie, mettre en correspondance la proposition de sous-partie avec une proposition correspondante parmi une ou plusieurs propositions d'objets restant après le premier filtrage, et
- exécuter un second filtrage de la ou des propositions d'objets restant après le premier filtrage et non appariées à l'une quelconque de la ou des propositions de sous-partie,

dans lequel le premier filtrage et le second filtrage sont basés sur des scores de confiance de classification et des scores de proximité des propositions d'objets, et dans lequel le second filtrage est statistiquement plus agressif que le premier filtrage, de sorte que le rejet d'une proposition d'objet ayant un score de confiance de classification inférieur à celui d'une autre proposition d'objet utilisant le second filtrage nécessite moins de proximité des propositions d'objets que le rejet de la proposition d'objet ayant le score de confiance de classification inférieur à celui de l'autre proposition d'objet utilisant le premier filtrage.

15. Produit de programme informatique (610), comprenant un support de stockage lisible par ordinateur (630) sur lequel est stocké le programme informatique (620) selon la revendication 14.

**Fig. 1A**

**Fig. 1B**

Fig. 1C

Fig. 1D

200

| S210 | Obtain object proposals and subpart proposals |

| S220 | Perform first filtering using first proximity threshold |

| S230 | Match subpart proposals with remaining object proposals after first filtering |

| S240 | Perform second filtering using second proximity threshold |

*Fig. 2*

*Fig. 3A*

*Fig. 3B*

*Fig. 3C*

**Fig. 4**

**Fig. 5A**

**Fig. 5B**

**Fig. 6**

**EP 4 712 039 B1**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUNHUA GU et al.** Joint Pedestrian and Body Part Detection via Semantic Relationship Learning. *Appl. Sci.*, 2019, vol. 9, 752

- **A. SHEPLEY et al.** Confluence: A Robust Non-IoU Alternative to Non-Maxima Suppression in Object Detection. *arXiv:2012.00257*